# EUROPÄISCHE PATENTSCHRIFT

(11) **EP 3 911 544 B1**
(45) Veröffentlichungstag und Bekanntmachung des Hinweises auf die Patenterteilung: **08.02.2023**
(21) Anmeldenummer: 19835622.2
(22) Anmeldetag: 17.12.2019
(51) Int. Cl.: B60T 1/06, F16D 65/18, B60B 27/00

(54) **ELEKTRISCHE ACHSANTRIEBSEINHEIT MIT INTEGRIERTER BREMSEINRICHTUNG MIT AXIAL BEWEGLICHEM BREMSSCHEIBENELEMENT**
ELECTRIC AXLE DRIVE UNIT WITH INTEGRATED BRAKE DEVICE WITH AXIALLY MOVABLE BRAKE DISC ELEMENT
UNITÉ ÉLECTRIQUE D'ENTRAÎNEMENT D'ESSIEU POURVUE D'UN DISPOSITIF DE FREINAGE INTÉGRÉ PRÉSENTANT UN ÉLÉMENT AXIALEMENT MOBILE DE DISQUE DE FREIN

(30) Priorität: 14.01.2019 DE 102019100738
(43) Veröffentlichungstag der Anmeldung: 24.11.2021
(73) Patentinhaber: Schaeffler Technologies AG & Co. KG, 91074 Herzogenaurach (DE)
(72) Erfinder: WIMMER, Doris Maria, 77883 Ottenhöfen (DE); ORTMANN, Simon, 76532 Baden-Baden (DE); WAGNER, Philippe, 67460 Souffelweyersheim (FR); GRAUSS, Aurelien, 67670 Mommenheim (FR)
(86) Internationale Anmeldenummer: PCT/DE2019/101098
(87) Internationale Veröffentlichungsnummer: WO 2020/147881

(56) Entgegenhaltungen:
- CN-A- 107 487 175
- DE-A1-102017 111 229
- US-A1- 2014 368 092

## Beschreibung

Die Erfindung betrifft eine elektrische Achsantriebseinheit (auch als elektrische Achse / E-Achse bezeichnet) für ein Kraftfahrzeug, wie einen Pkw, Lkw, Bus oder ein sonstiges Nutzfahrzeug. Die elektrische Achsantriebseinheit ist weiter bevorzugt in einem Kraftfahrzeug, wie einem Hybridfahrzeug (in Verbindung mit einer Verbrennungskraftmaschine) oder einem rein elektrisch angetriebenen Fahrzeug eingesetzt.

Bei allgemein bekannten E-Achsen rein elektrisch angetriebener Fahrzeuge wird die Energie des Bremsvorgangs im Normalfall rekuperiert. Wenn ein Akku jedoch voll ist bzw. bei einem Notbremsvorgang, kurz bei Verzögerung größer ca. 0,5 G, bei dem auch der Einsatz des ABS üblicherweise notwendig ist, wird jedoch prinzipiell eine zusätzliche Bremse benötigt. In Fahrzeugen mit elektrischen Antrieben, die gegenwärtig auf dem Markt sind, wird daher eine zusätzliche konventionelle mechanische Bremsanlage eingebaut, die separat zu einer elektrischen Antriebseinheit ausgebildet ist. Dadurch wird häufig relativ viel Bauraum in Anspruch genommen. Aus der DE 10 2017 111 229 A1 ist eine elektrische Achsantriebseinheit nach dem Oberbegriff des Anspruchs 1 offenbart.

Es ist daher die Aufgabe der vorliegenden Erfindung, eine elektrische Achsantriebseinheit zur Verfügung zu stellen, die eine kompaktere Bauweise ermöglicht und dennoch einfach montierbar ist.

Dies wird erfindungsgemäß durch den Gegenstand des Anspruchs 1 gelöst. Demnach ist eine elektrische Achsantriebseinheit für ein Kraftfahrzeug beansprucht, welche Achsantriebseinheit einen Elektromotor aufweist, wobei ein Stator des Elektromotors in einem Gehäuse fest aufgenommen ist und ein relativ zu dem Stator verdrehbar gelagerter Rotor des Elektromotors mit einer Radnabe drehgekoppelt oder (vorzugsweise über ein Getriebe und/oder eine Kupplung) drehkoppelbar ist. Auch weist die elektrische Achsantriebseinheit eine in oder an dem Gehäuse aufgenommene und mit der Radnabe in Wirkzusammenhang stehende Bremseinrichtung auf, wobei die Bremseinrichtung weiterhin einen fest an dem Gehäuse abgestützten ersten Bremsbestandteil, einen drehfest mit der Radnabe gekoppelten, zum reibkraftschlüssigen Verbinden mit dem ersten Bremsbestandteil angeordneten und ausgebildeten zweiten Bremsbestandteil sowie eine zum Aufbringen einer die Bremsbestandteile miteinander verbindenden Bremskraft ausgebildete und an dem Gehäuse angebrachte Betätigungseinheit aufweist. Zumindest einer der Bremsbestandteile weist zudem ein Tragteil sowie ein drehfest mit dem Tragteil verbundenes und in einer axialen Richtung einer Drehachse der Radnabe relativ zu dem Tragteil verschiebbar aufgenommenes Bremsscheibenelement auf.

Dadurch ergibt sich eine kompakt ausgebildete elektrische Achsantriebseinheit mit einer besonders leistungsfähigen als Bremsmodul umgesetzten Bremseinrichtung.

Weitere vorteilhafte Ausführungen sind mit den Unteransprüchen beansprucht und nachfolgend näher erläutert.

Demnach ist es weiterhin von Vorteil, wenn die Bremseinrichtung in einem Deckelelement des Gehäuses integriert ist. Weiter bevorzugt ist das Deckelelement derart ausgeformt, dass es einen die Bremseinrichtung aufnehmenden Aufnahmeraum begrenzt, welcher Aufnahmeraum in der axialen Richtung geöffnet ist. Dadurch ist ein einfach montierbares sowie integriertes Bremsmodul realisiert, von dem die entstehende Bremswärme unmittelbar zur Umgebung hin abgeleitet wird.

Ist die Betätigungseinheit als eine hydraulisch aktuierte Betätigungseinheit umgesetzt, ist diese besonders leistungsfähig realisiert. Dabei ist es zweckmäßig, wenn die Betätigungseinheit einen hydraulischen Bremszylinder aufweist.

Hinsichtlich der Ausführung der Betätigungseinheit ist es auch zweckmäßig, wenn diese mehrere in einer Umfangsrichtung verteilt angeordnete Druckkolben aufweist, d. h. als Mehrkolbenbremse realisiert ist, oder einen ringförmigen und konzentrisch zu der Drehachse angeordneten Druckkolben aufweist, d. h. als konzentrische Betätigungseinheit realisiert ist. Dadurch ist die Betätigungseinheit besonders kompakt ausgebildet, dient jedoch zum Aufbringen einer ausreichend hohen Bremskraft auf die Bremsscheibenelemente.

Für den Zusammenbau ist es insbesondere vorteilhaft, wenn beide Bremsbestandteile jeweils ein Tragteil sowie ein drehfest mit dem Tragteil verbundenes und in einer axialen Richtung der Drehachse der Radnabe relativ zu dem Tragteil verschiebbar aufgenommenes Bremsscheibenelement aufweisen. Dadurch ergibt sich eine einfach montierbare und platzsparend ausbildbare Bremseinrichtung.

Demnach ist bevorzugt, ein erstes Bremsscheibenelement des ersten Bremsbestandteils in der axialen Richtung relativ zu einem ersten Tragteil des ersten Bremsbestandteils verschiebbar aufzunehmen. Auch ist es von Vorteil, wenn ein zweites Bremsscheibenelement des zweiten Bremsbestandteils in der axialen Richtung relativ zu einem zweiten Tragteil des zweiten Bremsbestandteils verschiebbar aufgenommen ist.

Als zweckmäßig hat es sich auch herausgestellt, wenn der erste Bremsbestandteil zwei (erste) Bremsscheibenelemente und der zweite Bremsbestandteil ein (zweites) Bremsscheibenelement aufweist. Ein zweites Bremsscheibenelement des zweiten Bremsbestandteils ist dann vorzugsweise zwischen zwei ersten Bremsscheibenelementen des ersten Bremsbestandteils angeordnet.

Zweckmäßig ist es auch, wenn das erste Bremsscheibenelement und/oder das zweite Bremsscheibenelement eine in Umfangsrichtung durchgängig umlaufende Bremsfläche oder mehrere in Umfangsrichtung verteilte, beabstandet zueinander angeordnete Bremsflächen aufweisen / aufweist.

Ist eine durch die Bremsbestandteile gebildete Reibeinheit mit der Betätigungseinheit in der axialen Richtung geschachtelt angeordnet, wird der Bauraum noch effizienter genutzt.

Diesbezüglich ist es zweckmäßig, wenn die Betätigungseinheit mit ihrem Aktorgehäuse und/oder ihrem in dem Aktorgehäuse verschiebbar aufgenommenen Stellglied, vorzugsweise, dem Druckkolben, radial innerhalb der Bremsscheibenelemente angeordnet ist. Dadurch wird axialer Bauraum deutlich eingespart.

Ist die Betätigungseinheit mit ihrem Aktorgehäuse und/oder ihrem in dem Aktorgehäuse verschiebbar aufgenommenen Stellglied axial auf gleicher Höhe mit zumindest einem der Bremsscheibenelemente angeordnet, wird diese axiale Kompaktheit weiter verstärkt.

In anderen Worten ausgedrückt, ist somit erfindungsgemäß ein integriertes Bremsmodul (Bremseinrichtung) in einer E-Achse (elektrische Achsantriebseinheit) mit axial beweglicher Bremsscheibe (Bremsscheibenelementen) umgesetzt. Eine Betätigungseinheit kann entweder als konzentrischer Bremszylinder ggf. mit einem konzentrischen ringförmigen Kolben oder als ein Mehrkolbensystem umgesetzt sein. Die Bremse (Bremseinrichtung) weist eine axial verlagerbare Bremsscheibe auf. Es handelt sich um eine Lamellenbremse / Lamellenkupplung, bei der der Innenlamellenträger (erstes Tragteil) am Gehäuse befestigt ist und der Außenlamellenträger (zweites Tragteil) mit einem Ausgangsteil verbunden ist. Für die Betätigung wird kein Durchgriff benötigt, da die Betätigung von einer den Lamellenträgern gegenüberliegenden Seite erfolgt. Reibeinrichtung (Reibeinheit) und Betätigungseinrichtung (Betätigungseinheit) sind axial geschachtelt, wodurch ein axial kurzer Aufbau realisiert wird.

Die Erfindung wird nun nachfolgend anhand einer Figur näher erläutert.

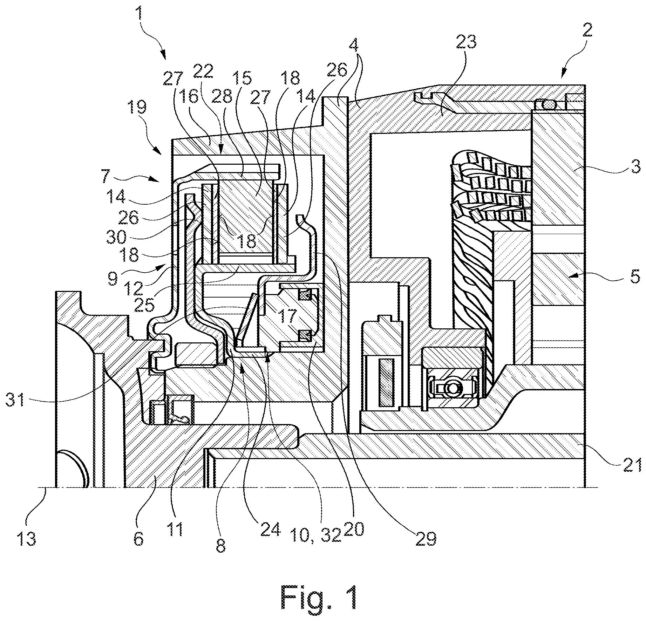

Es zeigt die einzige Fig. 1 eine Längsschnittdarstellung eines Bereichs einer erfindungsgemäßen elektrischen Achsantriebseinheit nach einem bevorzugten Ausführungsbeispiel, wobei ein Gehäuse im Bereich eines Elektromotors und einer Bremseinrichtung sowie eine Radnabe zu erkennen sind.

Die Figur ist lediglich schematischer Natur und dient ausschließlich dem Verständnis der Erfindung.

Mit der einzigen Fig. 1 ist eine erfindungsgemäße elektrische Achsantriebseinheit 1 veranschaulicht, die gemäß einem bevorzugten Ausführungsbeispiel Teil eines Kraftfahrzeuges / eines Kraftfahrzeugantriebsstranges ist. Die auch als E-Achse bezeichnete elektrische Achsantriebseinheit 1 weist einen integrierten Elektromotor 2 auf. Der Elektromotor 2 ist im Betrieb zum Antrieb einer Radnabe 6 bzw. einer mit der Radnabe 6 drehverbundenen Achswelle 21 eingesetzt. Der Elektromotor 2 ist mit seinem Stator 3 und seinem relativ zu dem Stator 3 drehbar gelagerten Rotor 5 konzentrisch zu einer zentralen Drehachse 13 der Radnabe 6 / der Achswelle 21 angeordnet. Der Stator 3 ist in einem Gehäuse 4 der Achsantriebseinheit 1 fest aufgenommen. Die Achswelle 21 durchdringt den Elektromotor 2 in axialer Richtung (entlang der Drehachse 13) und ist radial innerhalb des Rotors 5 angeordnet. Die Achswelle 21 und die Radnabe 6 sind auf typische Weise relativ zu dem Gehäuse 4 verdrehbar gelagert.

Die Richtungsbezeichnungen axial, radial sowie Umfangsrichtung beziehen sich auf die zentrale Drehachse 13. Unter axialer Richtung ist folglich eine Richtung entlang der Drehachse 13, unter radialer Richtung eine Richtung senkrecht zu der Drehachse 13 und in Umfangsrichtung eine Richtung entlang einer konzentrisch um die Drehachse 13 herum verlaufenden Kreislinie zu verstehen.

Erfindungsgemäß ist zusätzlich zu dem Elektromotor 2 eine Bremseinrichtung 7, die modular aufgebaut ist, in dem Gehäuse 4 integriert. Die Bremseinrichtung 7 ist an einem Deckelelement 16 des Gehäuses 4 aufgenommen. Das Deckelelement 16 ist wiederum an einem den Elektromotor 2 umhausenden Hauptgehäuseteil 23 befestigt. Radial innerhalb des Deckelelementes 16 durchdringt die Radnabe 6 samt der Achswelle 21 eine axiale Öffnung des Gehäuses 4. Das gesamtheitlich ringförmige / in Umfangsrichtung umlaufende Deckelelement 16 bildet einen rinnenförmigen (ringförmigen, umlaufenden sowie zu einer axialen Seite hin geöffneten) Aufnahmeraum 22 aus, in welchem Aufnahmeraum die Bremseinrichtung 7 aufgenommen ist. Der die Bremseinrichtung 7 aufnehmende Bereich des Gehäuses 4 (in Form des Deckelelementes 16) ist daher zu einer axialen Seite hin zur Umgebung hin geöffnet. Somit ist auch eine durch die Bremseinrichtung 7 gebildete Reibeinheit 19 zur Umgebung hin geöffnet, was eine besonders effektive Belüftung dieser Reibeinheit 19 im Betrieb gewährleistet.

Die Reibeinheit 19 der Bremseinrichtung 7 weist einen ersten Bremsbestandteil 8 und einen zweiten Bremsbestandteil 9 auf. Der erste Bremsbestandteil 8 ist gehäusefest, d. h. fest mit dem Deckelelement 16 verbunden / vor einem Verdrehen gegenüber dem Gehäuse 4 gesichert. Der erste Bremsbestandteil 8 weist ein erstes Tragteil 11 in Form eines Innenträgers auf, wobei das erste Tragteil 11 über einen Verzahnungsbereich 24 fest an dem Deckelelement 16 (in Umfangsrichtung) abgestützt ist. Radial außerhalb des Verzahnungsbereichs 24 bildet das erste Tragteil 11 einen in axialer Richtung verlaufenden (ersten) Hülsenbereich 25 auf, auf welchem Hülsenbereich 25 zu einer radialen Außenseite hin zwei relativ zueinander verschiebbar angeordnete erste Bremsscheibenelemente 14 des ersten Bremsbestandteils 8 aufgenommen sind. Die als Reiblamellen ausgebildeten ersten Bremsscheibenelemente 14 weisen jeweils einen Stahlkörper 26 sowie einen Reibbelag 27 auf.

Der zweite Bremsbestandteil 9, der mit dem ersten Bremsbestandteil 8 zusammenwirkt und in reibkraftschlüssigem Kontakt mit diesem bringbar ist, ist drehfest an der Radnabe 6 angebunden. Hierzu ist ein zweites Tragteil 12 des zweiten Bremsbestandteils 9 unmittelbar an der Radnabe 6 befestigt. Das als Außenträger ausgebildete zweite Tragteil 12 nimmt auf seinem radial außerhalb des ersten Hülsenbereiches 25 angeordneten (zweiten) Hülsenbereich 28 ein zweites Bremsscheibenelement 15 drehfest auf. Das zweite Bremsscheibenelement 15 ist in der axialen Richtung zwischen den ersten Bremsscheibenelementen 14 angeordnet. Die Bremsscheibenelemente 14, 15 sind jeweils relativ zueinander in axialer Richtung verschiebbar. Jedes Bremsscheibenelement 14, 15 weist auf der dem benachbarten Bremsscheibenelement 14, 15 zugewandten Seite eine umlaufende Bremsfläche 18 auf, wobei prinzipiell gemäß weiteren Ausführungen auch mehrere in Umfangsrichtung verteilte, beabstandet zueinander angeordnete Bremsflächen ausbildbar sind.

In einer betätigten / aktivierten Stellung der Bremseinrichtung 7 sind die beiden Bremsbestandteile 8, 9 (über die Bremsscheibenelemente 14, 15) reibkraftschlüssig miteinander verbunden und somit ist der zweite Bremsbestandteil 9 relativ zu dem Gehäuse 4 gehalten. In einer unbetätigten / deaktivierten Stellung der Bremseinrichtung 7 sind die Bremsbestandteile 8, 9 frei relativ zueinander verdrehbar. Zum Verstellen der Bremseinrichtung 7 zwischen ihrer deaktivierten und aktivierten Stellung ist eine Betätigungseinheit 10 vorhanden. Die Betätigungseinheit 10 ist in dieser Ausführung als hydraulische Betätigungseinheit 10 realisiert. Die Betätigungseinheit 10 weist einen hydraulischen Bremszylinder 32 auf. Der Bremszylinder 32 ist als konzentrischer Bremszylinder 32 realisiert und konzentrisch zu der Drehachse 13 angeordnet. Der Bremszylinder 32 weist ein konzentrisch zu der Drehachse 13 angeordnetes Aktorgehäuse 20 auf. Innerhalb dieses Aktorgehäuses 20 ist ein ein Stellglied ausbildender Druckkolben 17, hier ein Ringkolben, alternativ auch mehrere in Umfangsrichtung verteilte einzelne Druckkolben 17, relativ verschiebbar aufgenommen. Der Druckkolben 17 wirkt auf ein Stellelement 29 in Form eines Drucktopfes verschiebend einwirkt. Das Stellelement 29 wirkt zu einer ersten axialen Seite der Gesamtheit der Bremsscheibenelemente 14, 15 verschiebend auf die Bremsscheibenelemente 14, 15 ein. Zu einer dem Stellelemente 29 abgewandten axialen Seites der Gesamtheit der Bremsscheibenelemente 14, 15 ist ein axial fester Gegenplattenbereich 30 vorhanden. Der Gegenplattenbereich 30 ist als einzelnes Element realisiert und ebenfalls an dem Deckelelement 16 befestigt. Zur Rückstellung der Betätigungseinheit 10 in eine mit der deaktivierten Stellung korrespondierende Position ist eine Rückstellfeder 31 vorhanden, die zwischen dem ersten Tragteil 11 und dem Stellelement 29 eingespannt ist.

Wie des Weiteren zu erkennen, ist der Bremszylinder 32, d. h. insbesondere der Druckkolben 17 und das Aktorgehäuse 20 in radialer Richtung innerhalb der Bremsscheibenelemente 14, 15 angeordnet. Auch befindet sich der Bremszylinder 32 in axialer Richtung auf gleicher Höhe mit einem der ersten Bremsscheibenelemente 14 und einem Abschnitt des zweiten Bremsscheibenelementes 15.

In anderen Worten ausgedrückt, ist erfindungsgemäß ein (trockenes) Bremsmodul (Bremseinrichtung 7) an einer Radachse vor der Gelenkwelle integriert. Bei einer E-Achse 1 führt dies zu einem kompakten Baukasten-Gedanken. Vorzugsweise ist die dargestellte Anordnung 1 für eine Bremsleistung im PKW-Bereich dimensioniert.

Wahlweise kann die Anordnung auch in einer Anwendung mit Verbrennungsmotor oder in einer Hybridanwendung dargestellt werden.

Fig. 1 zeigt das integrierte Bremsmodul 7 in der E-Achse 1, wobei das Bremsmodul 7 im Gehäusedeckel 16 ausgebildet ist und gemäß einem Baukastensystem optional integriert werden kann. Die Schnittstelle, die das Drehmoment überträgt, ist hierbei die Radnabe 6 bzw. der Flansch, an dem die Gelenkwelle (Achswelle 21) angeschraubt wird. Abgestützt wird das Drehmoment auf dem E-Achsen-Gehäuse 4, mit dem der Gehäusedeckel 16 verbunden ist (z.B. mit einer Schraubverbindung). Vorteil dieser Anordnung ist, dass die hohe Temperatur, die über den Bremsvorgang erzeugt wird, zur linken, offenen Seite (des Gehäusedeckels 16) abtransportiert werden kann. Die dargestellte Anordnung ist ein trockenes Bremsmodul 7. Eine Bremsfläche 18 kann auch segmentiert ausgebildet sein.

### Bezugszeichenliste

- 1: Achsantriebseinheit
- 2: Elektromotor
- 3: Stator
- 4: Gehäuse
- 5: Rotor
- 6: Radnabe
- 7: Bremseinrichtung
- 8: erster Bremsbestandteil
- 9: zweiter Bremsbestandteil
- 10: Betätigungseinheit
- 11: erstes Tragteil
- 12: zweites Tragteil
- 13: Drehachse
- 14: erstes Bremsscheibenelement
- 15: zweites Bremsscheibenelement
- 16: Deckelelement
- 17: Druckkolben
- 18: Bremsfläche
- 19: Reibeinheit
- 20: Aktorgehäuse
- 21: Achswelle
- 22: Aufnahmeraum
- 23: Hauptgehäuseteil
- 24: Verzahnungsbereich
- 25: erster Hülsenbereich
- 26: Stahlkörper
- 27: Reibbelag
- 28: zweiter Hülsenbereich
- 29: Stellelement
- 30: Gegenplattenbereich
- 31: Rückstellfeder
- 32: Bremszylinder

## Patentansprüche

1. Elektrische Achsantriebseinheit (1) für ein Kraftfahrzeug, mit einem Elektromotor (2), wobei ein Stator (3) des Elektromotors (2) in einem Gehäuse (4) fest aufgenommen ist und ein relativ zu dem Stator (3) verdrehbar gelagerter Rotor (5) des Elektromotors (2) mit einer Radnabe (6) drehgekoppelt oder drehkoppelbar ist, sowie einer in oder an dem Gehäuse (4) aufgenommenen und mit der Radnabe (6) in Wirkzusammenhang stehenden Bremseinrichtung (7), **dadurch gekennzeichnet, dass** die Bremseinrichtung (7) weiterhin einen fest an dem Gehäuse (4) abgestützten ersten Bremsbestandteil (8), einen drehfest mit der Radnabe (6) gekoppelten, zum reibkraftschlüssigen Verbinden mit dem ersten Bremsbestandteil (8) angeordneten und ausgebildeten zweiten Bremsbestandteil (9) sowie eine zum Aufbringen einer die Bremsbestandteile (8, 9) miteinander verbindenden Bremskraft ausgebildete und an dem Gehäuse (4) angebrachte Betätigungseinheit (10) aufweist, wobei zumindest einer der Bremsbestandteile (8, 9) ein Tragteil (11, 12) sowie ein drehfest mit dem Tragteil (11, 12) verbundenes und in einer axialen Richtung einer Drehachse (13) der Radnabe (6) relativ zu dem Tragteil (11, 12) verschiebbar aufgenommenes Bremsscheibenelement (14, 15) aufweist.

2. Achsantriebseinheit (1) nach Anspruch 1, **dadurch gekennzeichnet, dass** die Bremseinrichtung (7) in einem Deckelelement (16) des Gehäuses (4) integriert ist.

3. Achsantriebseinheit (1) nach Anspruch 1 oder 2, **dadurch gekennzeichnet, dass** die Betätigungseinheit (10) als eine hydraulisch aktuierte Betätigungseinheit (10) umgesetzt ist.

4. Achsantriebseinheit (1) nach einem der Ansprüche 1 bis 3, **dadurch gekennzeichnet, dass** die Betätigungseinheit (10) mehrere in einer Umfangsrichtung verteilt angeordnete Druckkolben (17) oder einen ringförmigen und konzentrisch zu der Drehachse (13) angeordneten Druckkolben (17) aufweist.

5. Achsantriebseinheit (1) nach einem der Ansprüche 1 bis 4, **dadurch gekennzeichnet, dass** ein erstes Bremsscheibenelement (14) des ersten Bremsbestandteils (8) in der axialen Richtung relativ zu einem ersten Tragteil (11) des ersten Bremsbestandteils (8) verschiebbar aufgenommen ist.

6. Achsantriebseinheit (1) nach einem der Ansprüche 1 bis 5, **dadurch gekennzeichnet, dass** ein zweites Bremsscheibenelement (15) des zweiten Bremsbestandteils (9) in der axialen Richtung relativ zu einem zweiten Tragteil (12) des zweiten Bremsbestandteils (9) verschiebbar aufgenommen ist.

7. Achsantriebseinheit (1) nach einem der Ansprüche 5 oder 6, **dadurch gekennzeichnet, dass** das erste Bremsscheibenelement (14) und/oder das zweite Bremsscheibenelement (15) eine in Umfangsrichtung durchgängig umlaufende Bremsfläche (18) oder mehrere in Umfangsrichtung verteilte, beabstandet zueinander angeordnete Bremsflächen aufweisen/aufweist.

8. Achsantriebseinheit (1) nach einem der Ansprüche 1 bis 7, **dadurch gekennzeichnet, dass** eine durch die Bremsbestandteile (8, 9) gebildete Reibeinheit (19) mit der Betätigungseinheit (10) in der axialen Richtung geschachtelt angeordnet ist.

9. Achsantriebseinheit (1) nach einem der Ansprüche 5 bis 8, **dadurch gekennzeichnet, dass** die Betätigungseinheit (10) mit ihrem Aktorgehäuse (20) und/oder ihrem in dem Aktorgehäuse (20) verschiebbar aufgenommenen Stellglied (17) radial innerhalb der Bremsscheibenelemente (14, 15) angeordnet ist.

10. Achsantriebseinheit (1) nach einem der Ansprüche 5 bis 9, **dadurch gekennzeichnet, dass** die Betätigungseinheit (10) mit ihrem Aktorgehäuse (20) und/oder ihrem in dem Aktorgehäuse (20) verschiebbar aufgenommenen Stellglied (17) axial auf gleicher Höhe mit zumindest einem der Bremsscheibenelemente (14, 15) angeordnet ist.

## Claims

1. An electric axle drive unit (1) for a motor vehicle, comprising an electric motor (2), wherein a stator (3) of the electric motor (2) is securely received in a housing (4) and a rotor (5) of the electric motor (2) is rotatably mounted relative to the stator (3) and is rotatably coupled or able to be rotatably coupled to a wheel hub (6), and comprising a braking device (7) received in or on the housing (4) and operatively connected to the wheel hub (6), **characterised in that** the braking device (7) furthermore has a first brake component (8) securely supported on the housing (4), a second brake component (9) coupled in a non-rotatable manner to the wheel hub (6), arranged and designed for frictional connection with the first brake component (8), and an actuating unit (10) which is designed to apply a braking force that connects the brake components (8, 9) to one another and is attached to the housing (4), wherein at least one of the brake components (8, 9) has a support part (11, 12) and a brake disc element (14, 15) which is connected in a non-rotatable manner to the support part (11, 12) and which is received in a displaceable manner in an axial direction of a rotational axis (13) of the wheel hub (6) relative to the support part (11, 12).

2. The axle drive unit (1) according to Claim 1, **characterised in that** the braking device (7) is integrated in a cover element (16) of the housing (4).

3. The axle drive unit (1) according to Claim 1 or 2, **characterised in that** the actuating unit (10) is implemented as a hydraulically actuated actuating unit (10).

4. The axle drive unit (1) according to any one of Claims 1 to 3, **characterised in that** the actuating unit (10) has a plurality of pressure pistons (17) distributed in a circumferential direction or an annular pressure piston (17) arranged concentrically to the axis of rotation (13).

5. The axle drive unit (1) according to any one of Claims 1 to 4, **characterised in that** a first brake disc element (14) of the first brake component (8) is displaceably received in the axial direction relative to a first support part (11) of the first brake component (8).

6. The axle drive unit (1) according to any one of Claims 1 to 5, **characterised in that** a second brake disc element (15) of the second brake component (9) is displaceably received in the axial direction relative to a second support part (12) of the second brake component (9).

7. The axle drive unit (1) according to either one of Claims 5 or 6, **characterised in that** the first brake disc element (14) and/or the second brake disc element (15) have/has a braking surface (18) running continuously in the circumferential direction or a plurality of braking surfaces distributed in the circumferential direction and arranged at a distance from one another.

8. The axle drive unit (1) according to any one of Claims 1 to 7, **characterised in that** a friction unit (19) formed by the brake components (8, 9) is nested with the actuating unit (10) in the axial direction.

9. The axle drive unit (1) according to any one of Claims 5 to 8, **characterised in that** the actuating unit (10) with its actuator housing (20) and/or its actuator (17) received in a displaceable manner in the actuator housing (20), is arranged radially inside the brake disc elements (14, 15).

10. The axle drive unit (1) according to any one of Claims 5 to 9, **characterised in that** the actuating unit (10) with its actuator housing (20) and/or its actuator (17) received in a displaceable manner in the actuator housing (20) is arranged axially at the same height as at least one of the brake disc elements (14, 15).

## Revendications

1. Unité électrique d'entraînement d'essieu (1) pour un véhicule automobile, comportant un moteur électrique (2), dans laquelle un stator (3) du moteur électrique (2) est logé de manière fixe dans un carter (4) et un rotor (5) du moteur électrique (2) monté rotatif par rapport au stator (3) est accouplé en rotation ou peut être accouplé en rotation à un moyeu de roue (6), ainsi que comportant un dispositif de freinage (7) logé dans ou sur le carter (4) et en liaison active avec le moyeu de roue (6), **caractérisée en ce que** le dispositif de freinage (7) comprend en outre un premier composant de frein (8) prenant appui de manière fixe sur le carter (4), un second composant de frein (9) accouplé de manière solidaire en rotation au moyeu de roue (6) et agencé et conçu pour être en liaison à force de friction avec le premier composant de frein (8), ainsi qu'une unité d'actionnement (10) conçue pour appliquer une force de freinage reliant les composants de frein (8, 9) l'un à l'autre et est installée sur le carter (4), dans laquelle au moins un des composants de frein (8, 9) comporte une partie support (11, 12), ainsi qu'un élément de disque de frein (14, 15) relié de manière solidaire en rotation à la partie support (11, 12) et logé de manière mobile dans une direction axiale d'un axe de rotation (13) du moyeu de roue (6) par rapport à la partie de support (11, 12).

2. Unité d'entraînement d'essieu (1) selon la revendication 1, **caractérisée en ce que** le dispositif de freinage (7) est intégré dans un élément couvercle (16) du carter (4).

3. Unité d'entraînement d'essieu (1) selon la revendication 1 ou 2, **caractérisée en ce que** l'unité d'actionnement (10) est conçue sous la forme d'une unité d'actionnement (10) actionnée de manière hydraulique.

4. Unité d'entraînement d'essieu (1) selon l'une quelconque des revendications 1 à 3, **caractérisée en ce que** l'unité d'actionnement (10) comporte plusieurs pistons de pression (17) disposés répartis dans une direction circonférentielle ou un piston de pression (17) annulaire et disposé concentriquement par rapport à l'axe de rotation (13).

5. Unité d'entraînement d'essieu (1) selon l'une quelconque des revendications 1 à 4, **caractérisée en ce qu'**un premier élément de disque de frein (14) du premier composant de frein (8) est logé de manière mobile dans la direction axiale par rapport à une première partie support (11) du premier composant de frein (8).

6. Unité d'entraînement d'essieu (1) selon l'une quelconque des revendications 1 à 5, **caractérisée en ce qu'**un second élément de disque de frein (15) du second composant de frein (9) est logé de manière mobile dans la direction axiale par rapport à une seconde partie support (12) du second composant de frein (9).

7. Unité d'entraînement d'essieu (1) selon l'une quelconque des revendications 5 ou 6, **caractérisée en ce que** le premier élément de disque de frein (14) et/ou le second élément de disque de frein (15) comportent une surface de freinage (18) s'étendant de manière continue dans la direction circonférentielle ou plusieurs surfaces de freinage disposées réparties dans la direction circonférentielle et espacées les unes des autres.

8. Unité d'entraînement d'essieu (1) selon l'une quelconque des revendications 1 à 7, **caractérisée en ce qu'**une unité de friction (19) formée par les composants de frein (8, 9) est disposée emboîtée avec l'unité d'actionnement (10) dans la direction axiale.

9. Unité d'entraînement d'essieu (1) selon l'une quelconque des revendications 5 à 8, **caractérisée en ce que** l'unité d'actionnement (10) avec son carter d'actionneur (20) et/ou son actionneur (17) logé de manière mobile dans le carter d'actionneur (20) est disposée radialement à l'intérieur des éléments de disque de frein (14, 15).

10. Unité d'entraînement d'essieu (1) selon l'une quelconque des revendications 5 à 9, **caractérisée en ce que** l'unité d'actionnement (10) avec son carter d'actionneur (20) et/ou son actionneur (17) logé de manière mobile dans le carter d'actionneur (20) est disposée axialement à la même hauteur qu'au moins un des éléments de disque de frein (14, 15).
